# EUROPÄISCHE PATENTSCHRIFT

(11) **EP 2 145 893 B1**
(45) Veröffentlichungstag und Bekanntmachung des Hinweises auf die Patenterteilung: **11.07.2012**
(21) Anmeldenummer: 09012793.7
(22) Anmeldetag: 03.05.2005
(51) Int. Cl.: C07F 9/30, C08K 5/5313, C08K 3/32

(54) **Diorganylphosphinsäure-Salze, ein Verfahren zu ihrer Herstellung und ihre Verwendung**
Salts of diorganyl phosphinic acids, method for their manufacture and their application
Sels d'acide de diorganylphosphine, leur procédé de fabrication et d'utilisation

(30) Priorität: 11.05.2004 DE 102004023085
(43) Veröffentlichungstag der Anmeldung: 20.01.2010
(62) Teilanmeldung aus: 05009647.8
(73) Patentinhaber: Clariant Produkte (Deutschland) GmbH, 65929 Frankfurt am Main (DE)
(72) Erfinder: Bauer, Harald, Dr., 50170 Kerpen (DE); Krause, Werner, Dr., 50354 Hürth (DE); Sicken, Martin, Dr., 51149 Köln (DE); Weferling, Norbert, Dr., 50354 Hürth (DE)
(74) Vertreter: Hütter, Klaus

(56) Entgegenhaltungen:
- EP-A1- 1 055 676
- DE-A1- 19 851 618

## Beschreibung

Die Erfindung betrifft Diorganylphosphinsäure-Salze, ein Verfahren zu ihrer Herstellung und ihre Verwendung.

Solche Verbindungen und ihre Herstellung wurden z. B. in US-A-3,197,436, US-A-3,255,125 und US-A-3,415,762, DE-A-19616025, DE-A-19910232, DE-A-19851729 und der WO-99/28327 beschrieben.

Am Stand der Technik ist nachteilig, dass die danach hergestellten Diorganylphosphinsäure-Salze auf Grund ihrer Zusammensetzung eine nicht ausreichende Verträglichkeit mit den Polymeren aufweisen, in denen sie eingesetzt werden sollen.

Es bestand somit die Aufgabe, Diorganylphosphinsäure-Salze bereitzustellen, die auf Grund ihrer spezifischen Zusammensetzung eine verbesserte Verträglichkeit mit den Polymeren aufweisen.

Weiterhin bestand die Aufgabe darin Flammschutzmittel-Zusammensetzungen auf Basis der erfindungsgemäßen Diorganylphosphinsäure-Salze zur Verfügung zu stellen, weiterhin flammgeschützte Polymerformmassen basierend auf Diorganylphosphinsäure-Salzen, bzw. Flammschutzmittel-Zusammensetzungen und weiterhin flammgeschützte Polymerformkörper mit verbesserten mechanischen Eigenschaften.

Überraschenderweise wurde nun gefunden, dass der Gehalt an teilweise wasserlöslichen, ionisierbaren Verbindungen maßgeblichen Einfluss auf die Verträglichkeit mit dem Polymer besitzt, bzw. dass ein nicht erfindungsgemäßer Gehalt an teilweise wasserlöslichen, ionisierbaren Verbindungen zu einer mangelnden Verträglichkeit von Diorganylphosphinsäure-Salzen bzw. Flammschutzmittel-Zusammensetzungen und Polymer führen kann.

Erfindungsgemäß wurde die vorgenannte Aufgabe durch Diorganylphosphinsäure-Salze mit einem spezifischen Gehalt an teilweise wasserlöslichen, ionisierbaren Verbindungen gelöst.

Gegenstand der Erfindung sind daher Diorganylphosphinsäure-Salze der Formel (I) 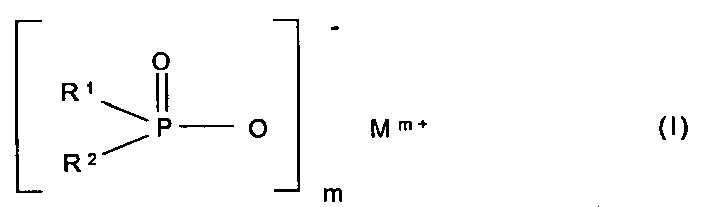 worin
R¹, R² gleich oder verschieden sind und C₁-C₆-Alkyl, linear oder verzweigt und/oder Aryl;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4;
x 1 bis 4
   bedeuten, **dadurch gekennzeichnet, dass** der Gesamt-Gehalt an teilweise wasserlöslichen, ionisierbaren Verbindungen und der wasserlösliche Gehalt aus den teilweise wasserlöslichen, ionisierbaren Verbindungen 8.200 bis 100 ppm, bevorzugt 7.000 bis 200 ppm beträgt und dass es sich bei den teilweise wasserlöslichen, ionisierbaren Verbindungen um solche handelt, die sich von Acetaten, Chloriden, Nitraten, Sulfaten, Phosphiten oder Phosphaten ableiten und dass der Gesamt-Gehalt an Chlorid (teilweise wasserlösliche, ionisierbare Verbindung) 1.700 bis 100 ppm und der Gehalt an wasserlöslichem Chlorid (wasserlöslicher Gehalt aus der teilweise wasserlöslichen, ionisierbaren Verbindung) 950 bis 10 ppm beträgt.

Die vorgenannten Verbindungen sind also in jedem Fall ionisierbar und bestehen aus einem wasserlöslichen Anteil (an z. B. Salz, welches aus dem Gesamt-Gehalt der vorgenannten Verbindungen herausgelöst werden kann) und einem nichtwasserlöslichen Anteil (beispielsweise ein Salzanteil, der teilweise zurückbleibt und somit nicht löslich ist).

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt handelt es sich bei den Diorganylphosphinsäure-Salzen der Formel (I) um solche aus der Gruppe Aluminiumtrisdiethylphosphinat, Aluminiumtrismethylethylphosphinat, Aluminiumtrisdiphenylphosphinat, Zinkbisdiethylphosphinat, Zinkbismethylethylphosphinat, Zinkbisdiphenylphosphinat, Titanylbisdiethylphosphinat, Titantetrakisdiethylphosphinat, Titanylbismethylethylphosphinat, Titantetrakismethylethylphosphinat, Titanylbisdiphenylphosphinat, Titantetrakisdiphenylphosphinat und beliebige Mischungen davon.

Bevorzugt beträgt die Restfeuchte der erfindungsgemäßen Diorganylphosphinsäure-salze 0,01 bis 10 Gew.-%, die Teilchengröße 0,1 bis 1.000 µm und die Schüttdichte 80 bis 800 g/l.

Die Erfindung betrifft auch ein Verfahren zur Herstellung von
Diorganylphosphinsäure-Salzen der Formel (I), **dadurch gekennzeichnet, dass** man die Diorganylphosphinsäure
a) mit einer freien Base oder
b) mit dem elementarem Metall des gewünschten Kations oder
c) in ihrer Form als Alkalimetall-Salz mit einem Salz des gewünschten Kations oder
d) in Form eines reaktiven Derivates mit einem Derivat des gewünschten Kations 0,01 bis 1 Stunden bei 0 bis 300°C umsetzt.

Die Erfindung betrifft auch die Verwendung der erfindungsgemäßen
Diorganylphosphinsäure-Salze als Flammschutzmittel oder in Flammschutzmittel-Zusammensetzungen, insbesondere für Polymere.

Bevorzugt enthält bei dieser Verwendung die Flammschutzmittel-Zusammensetzung 50 bis 99,9 Gew.-% des erfindungsgemäßen Diorganylphosphinsäure-Salzes und 0,1 bis 50 Gew.-% mindestens eines Additives.

Bevorzugt entstammen bei dieser Verwendung die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; aus der Gruppe oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; aus der Gruppe der Zinkverbindungen wie Zinkoxid, Zinkhydroxid, Zinnoxidhydrat, Zinkcarbonat, Zinkstannat, Zinkhydroxystannat, Zink-Silikat, Zinkphosphat, Zinkborat, Zinkmolybdat; aus der Gruppe der Carbodiimide und/oder (Poly-)isocyanate, wie Carbonylbiscaprolactam und/oder Styrol-Acryl-Polymere.

Die Erfindung betrifft auch die Verwendung der erfindungsgemäßen Diorganylphosphinsäure-Salzen in oder zur Herstellung von flammgeschützten Polymerformmassen, wobei die flammgeschützte Polymerformmasse 1 bis 50 Gew.-% erfindungsgemäße Diorganylphosphinsäure-Salze, 1 bis 99 Gew.-% Polymer oder Mischungen derselben enthält.

Bevorzugt entstammen dabei die Polymere aus der Gruppe der thermoplastischen Polymere wie Polyester, Polystyrol oder Polyamid und/oder der duroplastischen Polymere.

Bevorzugt wurde bei dieser Verwendung die Polymerformmasse erhalten, indem die Diorganylphosphinsäure-Salze und/oder die Flammschutzmittel-Zusammensetzungen mit dem Polymergranulat und evtl. Additiven in einem Mischer vermischt, in einem Compoundieraggregat unter höheren Temperaturen in der Polymerschmelze homogenisiert werden und anschließend der homogenisierte Polymerstrang abgezogen, gekühlt und portioniert wird.

Die Erfindung betrifft auch die Verwendung der erfindungsgemäßen Diorganylphosphinsäure-Salze in flammgeschützten Polymerformkörpern, -Filmen, -Fäden und -Fasern, wobei die flammgeschützten Polymerformkörper, -Filme, -Fäden und -Fasern 1 bis 50 Gew.- % erfindungsgemäße Diorganylphosphinsäure-Salze, 1 bis 99 Gew.-% Polymer oder Mischungen derselben, 0 bis 60 Gew.-% Additive und 0 bis 60 Gew.-% Füllstoff bzw. Verstärkungsmaterialien.

Unter protonierten Stickstoffbasen werden bevorzugt die protonierten Formen von Ammoniak, primären, sekundären, tertiären und quartären Aminen verstanden.

Unter protonierten Stickstoffbasen werden bevorzugt verstanden die protonierten Formen von Melamin, Harnstoff, Biuret, Guanidin, Alkylguanidin, Arylguanidin, Diphenylguanidin, Biguanid, Biuret, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin, Kondensationsprodukte des Melamins z. B. Melem, Melam oder Melon bzw. höher kondensierte Verbindungen dieses Typs.

Bevorzugt beträgt der wasserlösliche Gehalt aus den teilweise wasserlöslichen, ionisierbaren Verbindungen 3.200 bis 10 ppm, bevorzugt 2.000 bis 40 ppm.

Bevorzugt handelt es sich bei den teilweise wasserlöslichen, ionisierbaren Verbindungen um solche, die sich von Acetaten, Chloriden, Nitraten, Sulfaten, Phosphiten oder Phosphaten ableiten.

Bevorzugt beträgt der Gesamt-Gehalt an Acetat (teilweise wasserlösliche, ionisierbare Verbindung) 2.800 bis 100 ppm, bevorzugt 2.000 bis 200 ppm und der Gehalt an wasserlöslichem Acetat (wasserlöslicher Gehalt aus der teilweise wasserlöslichen, ionisierbaren Verbindung) 1.100 bis 10 ppm, bevorzugt 800 bis 40 ppm.

Bevorzugt beträgt der Gesamt-Gehalt an Chlorid (teilweise wasserlösliche, ionisierbare Verbindung) 1.500 bis 200 ppm und der Gehalt an wasserlöslichem Chlorid (wasserlöslicher Gehalt aus der teilweise wasserlöslichen, ionisierbaren Verbindung) 750 bis 40 ppm.

Bevorzugt beträgt der Gesamt-Gehalt an Nitrat (teilweise wasserlösliche, ionisierbare Verbindung) 2.100 bis 100 ppm, bevorzugt 900 bis 150 ppm und der Gehalt an wasserlöslichem Nitrat (wasserlöslicher Gehalt aus der teilweise wasserlöslichen, ionisierbaren Verbindung) 1.100 bis 10 ppm, bevorzugt 500 bis 30 ppm.

Bevorzugt beträgt der Gesamt-Gehalt an Phosphit (teilweise wasserlösliche, ionisierbare Verbindung) 8.200 bis 500 ppm, bevorzugt 7.000 bis 1.000 ppm und der Gehalt an wasserlöslichem Phosphit (wasserlöslicher Gehalt aus der teilweise wasserlöslichen, ionisierbaren Verbindung) 3.000 bis 50 ppm, bevorzugt 1.800 bis 100 ppm.

Bevorzugt beträgt der Gesamt-Gehalt an Sulfat (teilweise wasserlösliche, ionisierbare Verbindung) 3.800 bis 100 ppm, bevorzugt 2.500 bis 200 ppm und besonders bevorzugt 1.000 bis 300 ppm und der Gehalt an wasserlöslichem Sulfat (wasserlöslicher Gehalt aus der teilweise wasserlöslichen, ionisierbaren Verbindung) 1.200 bis 10 ppm, bevorzugt 750 bis 50 ppm.

Bevorzugt beträgt der Gesamt-Gehalt an Phosphat (teilweise wasserlösliche, ionisierbare Verbindung) 7.000 bis 500 ppm, bevorzugt 5.000 bis 1.000 ppm und der Gehalt an wasserlöslichem Phosphat (wasserlöslicher Gehalt aus der teilweise wasserlöslichen, ionisierbaren Verbindung) 3.000 bis 50 ppm, bevorzugt 2.000 bis 100 ppm.

Bevorzugt bedeutet M Aluminium, Calcium, Titan, Zink, Zinn oder Zirkonium.

Bevorzugt handelt es sich bei den freien Basen um solche Stickstoffbasen wie sie unter "protonierte Stickstoffbasen" beschrieben sind, jedoch in der unprotonierten Form.

Bevorzugt handelt es sich bei der freien Base um ein Oxid, gemischtes Metall-Oxid-Hydroxid, Hydroxid, Carbonat, Hydroxidcarbonat oder Hydrogencarbonat des gewünschten Kations.

Bevorzugt handelt es sich bei den gewünschten Kationen um Mg, Ca, Al, Sb, Sn, Ge, Ti, Fe, Zr, Zn, Ce, Bi, Sr, Mn, Li, Na und/oder K.

Bevorzugt handelt es sich bei den Salz des gewünschten Kations um Fluoride, Chloride, Bromide, Iodide; um Hypohalogenite, Halogenite, Halogenate, Perhalogenate; um Oxide, Hydroxide, Peroxide, Superoxide; um Sulfate, Hydrogensulfate, Sulfathydrate, Sulfite, Peroxosulfate; um Nitride, Phosphide; um Nitrat, Nitrathydrate, Nitrite, Phosphate, Peroxophosphate, Phosphite, Hypophosphite, Pyrophosphate; um Carbonate, Hydrogencarbonate, Hydroxidcarbonate, Carbonathydrate, Silicate, Hexafluorosilicate, Hexafluorosilicathydrate, Stannate; um Borate, Polyborate, Peroxoborate; um Thiocyanate, Cyanate, Cyanide; oder um Chromate, Chromite, Molybdate, Permanganat.

Bevorzugt handelt es sich bei den Salz des gewünschten Kations weiterhin um Verbindungen mit organischen Anionen aus der Gruppe der Mono-, Di-, Oligo-, Polycarbonsäuren Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactat, Lactathydrate, Acrylsäure, Maleinsäure, Bernsteinsäure, Glyzin, Phenolate, Para-Phenolsulfonate, Acetylacetonathydrate, Tannate, Dimethyldithiocarbamate, Trifluormethansulfonat, Alkylsulfonate, Aralkylsulfonate.

Bevorzugt handelt es sich bei dem Salz des gewünschten Kations weiterhin um Mono-(C₁-₁₈-Alkyl)-Phosphinate, Mono-(C₆-C₁₀-Aryl)-Phosphinate, Mono-(C₁-₁₈-Aralkyl)-Phosphinate, z. B. Monomethylphosphinate, Monoethylphosphinate, Monobutylphosphinate, Monohexylphosphinate, Monophenylphosphinate, Monobenzylphosphinate etc.

Bevorzugt handelt es sich bei dem Salz des gewünschten Kations weiterhin um Mono-(C₁-₁₈-Alkyl)-Phosphonate, Mono-(C₆-C₁₀-Aryl)-Phosphonate, Mono-( C₁-₁₈-Aralkyl)-Phosphonate, z. B. Monomethylphosphonate, Monoethylphosphonate, Monobutylphosphonate, Monohexylphosphonate, Monophenylphosphonate, Monobenzylphosphonate etc.

Bevorzugt handelt es sich bei dem Salz des gewünschten Kations um Salze von protonierten Stickstoffbasen; z. B. von Ammoniak, primären, sekundären, tertiären und quartären Aminen.

Bevorzugt handelt es sich bei dem Salz des gewünschten Kations auch um Salze von protonierten Stickstoffbasen; z. B. von Melamin, Harnstoff, Biuret, Guanidin, Alkylguanidin, Arylguanidin, Diphenylguanidin, Biguanid, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin, Kondensationsprodukte des Melamins z. B. Melem, Melam oder Melon bzw. höher kondensierte Verbindungen dieses Typs.

Bevorzugt handelt es sich bei den reaktiven Derivaten um Diorganylphosphinsäureester, -pyroester, -chloride, -phosphate.

Bevorzugt beträgt bei der vorgenannten Verwendung die mittlere Teilchengröße der Flammschutzmittel-Zusammensetzung 0,1 bis 3.000 µm, bevorzugt 1 bis 100 µm.

Bevorzugt beträgt bei der vorgenannten Verwendung die Restfeuchte der Flammschutzmittel-Zusammensetzung 0,01 bis 10 Gew.-%, bevorzugt 0,1 bis 1 Gew.-%.

Bevorzugt enthält die flammgeschützte Polymerformmasse 1 bis 50 Gew.-% erfindungsgemäße Diorganylphosphinsäure-Salze, 1 bis 99 Gew.-% Polymer oder Mischungen derselben und 0,1 bis 60 Gew.-% Additive.

Besonders bevorzugt enthält bei dieser Verwendung die flammgeschützte Polymerformmasse 5 bis 30 Gew.-% erfindungsgemäße Diorganylphosphinsäure-Salze, 5 bis 90 Gew.-% Polymer oder Mischungen derselben und 5 bis 40 Gew.-% Additive.

Geeignete Compoundieraggregate sind Einwellenextruder, Mehrzonenschnecken oder Doppelschneckenextruder.

Bevorzugt enthalten bei dieser Verwendung die flammgeschützten Polymerformkörper, -Filme, -Fäden und -Fasern 1 bis 50 Gew.-% erfindungsgemäße Diorganylphosphinsäure-Salze, 1 bis 99 Gew.-% Polymer oder Mischungen derselben, 0,1 bis 60 Gew.-% Additive und 0,1 bis 60 Gew.-% Füllstoff bzw. Verstärkungsmaterialien.

Bevorzugt enthalten bei dieser Verwendung die flammgeschützten Polymerformkörper, -Filme, -Fäden und -Fasern 1 bis 70 Gew.-% erfindungsgemäße flammgeschützte Polymerformmasse, 1 bis 99 Gew.-% Polymer oder Mischungen derselben, 0,1 bis 60 Gew.-% Additive und 0,1 bis 60 Gew.-% Füllstoff bzw. Verstärkungsmaterialien enthalten.

Bevorzugt betragen bei den Verfahren zur Herstellung von den o. g. Polymerformmassen die Verarbeitungstemperaturen bei Polystyrol 170 bis 200 °C, Polypropylen 200 bis 300 °C, Polyethylenterephthalat (PET) 250 bis 290 °C, Polybutylenterephthalat (PBT) 230 bis 270 °C, Polyamid 6 (PA 6)260 bis 290 °C, Polyamid 6.6 (PA 6.6) 260 bis 290 °C, Polycarbonat 280 bis 320 °C.

Bevorzugt wird beim Verfahren zur Herstellung von flammgeschützten Polymerformkörpern eine flammgeschützte Polymer-Formmassen durch Spritzgießen und Pressen, Schaumspritzgießen, Gasinnendruck-Spritzgießen, Blasformen, Foliengießen, Kalandern, Laminieren, Beschichten etc. zum flammgeschützten Polymerformkörper verarbeitet.

Die Verarbeitungstemperaturen bei dem vorgenannten Verfahren betragen bei Polystyrol 200 bis 250 °C, bei Polypropylen 200 bis 300 °C, bei Polyethylenterephthalat (PET) 250 bis 290 °C, bei Polybutylenterephthalat (PBT) 230 bis 270 °C, bei Polyamid 6 (PA 6) 260 bis 290 °C, bei Polyamid 6.6 (PA 6.6) 6.6 260 bis 290 °C, bei Polycarbonat 280 bis 320 °C betragen.

Die Verträglichkeit eines Additivs mit einem Polymer kann sich darin ausdrücken, wie sehr das mittlere Molekulargewicht bei der Verarbeitung eines Polymers durch das Additiv verringert wird. Man vergleicht dazu eine für das mittlere Molekulargewicht charakteristische Kennzahl des unbehandelten Polymers mit der Kennzahl des mit Additiv behandelten Polymers.

Eine solche dimensionslose Kennzahl ist die spezifische Viskosität (SV-Wert). Diese leitet sich aus der Bestimmung der Viskosität einer Lösung des Polymers in einem Lösungsmittel her. Dabei wird die Viskosität der Polymerlösung zu der Viskosität des reinen Lösungsmittels ins Verhältnis gesetzt.

Die Verträglichkeit wird mit Hilfe der SV-Zahl ausgedrückt. Danach verbessert sich die Verträglichkeit (SV-Zahl) z. B. mit Polybutylenterephthalat ab einem bestimmten Gehalt an teilweise wasserlöslichen ionisierbaren Verbindungen sprunghaft.

Erfindungsgemäß sind bei Polybutylenterephthalat SV-Zahlen von 750 bis 1400 bevorzugt, 850 bis 1250 besonders bevorzugt. Die SV-Zahl kann von einer erfindungsgemäßen Polymer-Formmasse oder von einem Polymerformkörper bestimmt werden.

Zur Beurteilung der Verträglichkeit kann auch der Volumenfließindex (Melt Flow Index, MFI, MVR) herangezogen werden. Ein starker Anstieg des MVR-Wertes deutet auf Polymerabbau hin.

Bei erfindungsgemäßen glasfaserverstärkten flammgeschützten Polymerformmassen auf Basis von Polyamid 6.6 beträgt der Wert 2 bis 200 cm³/min (275 °C, 5 kg).

Bei den teilweise wasserlöslichen, ionisierbaren Verbindungen handelt es sich z. B. um Substanzen aus der Gruppe der anorganischen, organischen, insbesondere auch phosphororganischen Salzen und Mischungen davon.

Bevorzugt sind teilweise wasserlösliche, ionisierbare Verbindungen mit anorganischen Anionen wie z. B. Fluoride, Chloride, Bromide, Iodide; Hypohalogenite, Halogenite, Halogenate, z. B. Iodat, Perhalogenate, z. B. Perchlorat); Oxide, Hydroxide, Peroxide, Superoxide; Sulfate, Hydrogensulfate, Sulfathydrate, Sulfite, Peroxosulfate; Nitride, Phosphide; Nitrat, Nitrathydrate, Nitrite, Phosphate, Peroxophosphate, Phosphite, Hypophosphite, Pyrophosphate; Carbonate, Hydrogencarbonate, Hydroxidcarbonate, Carbonathydrate, Silicate, Hexafluorosilicate, Hexafluorosilicathydrate, Stannate; Borate, Polyborate, Peroxoborate; Thiocyanate, Cyanate, Cyanide; Chromate, Chromite, Molybdate, Permanganat.

Bevorzugt sind auch teilweise wasserlösliche, ionisierbare Verbindungen mit organischen Anionen aus der Gruppe der Mono-, Di-, Oligo-, Polycarbonsäuren wie Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactat, Lactathydrate, Acrylsäure, Maleinsäure, Bernsteinsäure, von Aminosäuren (Glyzin), von sauren Hydroxofunktionen (Phenolate etc.), Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate.

Bevorzugt sind auch teilweise wasserlösliche, ionisierbare Verbindungen mit Anionen aus der Gruppe der Monoorganylphosphinate wie Mono-(C₁-₁₈-Alkyl)-Phosphinate, Mono-(C₆-C₁₀-Aryl)-Phosphinate, Mono-(C₁-₁₈-Aralkyl)-Phosphinate z. B. Monomethylphosphinate Monoethylphosphinate, Monobutylphosphinate, Monohexylphosphinate, Monophenylphosphinate, Monobenzylphosphinate etc.

Bevorzugt sind auch teilweise wasserlösliche, ionisierbare Verbindungen mit Anionen aus der Gruppe der Monoorganylphosphonate wie Mono-(C₁-₁₈-Alkyl)-Phosphonate, Mono-(C₆-C₁₀-Aryl)-Phosphonate, Mono-(C₁-₁₈-Aralkyl)-Phosphonate z. B. Monomethylphosphonate Monoethylphosphonate, Monobutylphosphonate, Monohexylphosphonate, Monophenylphosphonate, Monobenzylphosphonate etc.

Weiterhin sind auch beliebige Mischungen erfindungsgemäß einsetzbar.

Bevorzugt sind teilweise wasserlösliche, ionisierbare Verbindungen mit Kationen der Alkalimetalle sowie mit Kationen von protonierten Stickstoffbasen z. B. von Ammoniak, primären, sekundären, tertiären und quartären Aminen.

Bevorzugt sind teilweise wasserlösliche, ionisierbare Verbindungen mit Kationen von protonierten Stickstoffbasen z. B. von Melamin, Harnstoff, Biuret, Guanidin, Alkylguanidin, Arylguanidin, Diphenylguanidin, Biguanid, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin, Kondensationsprodukte des Melamins z. B. Melem, Melam oder Melon bzw. höher kondensierte Verbindungen dieses Typs.

Bevorzugt sind teilweise wasserlösliche, ionisierbare Verbindungen mit Kationen der Erdalkalimetalle; mit Kationen der Elemente der dritten Hauptgruppe; mit Kationen der Nebengruppenelemente. Besonders bevorzugt sind Titan, Eisen, Zink.

Der Gehalt an teilweise ionisierbaren Verbindungen folgt aus der Herstellung des Diorganylphosphinsäure-Salzes. Quellen können z. B. das Lösungsmittel und/oder die Ausgangsverbindungen sein.

Der Gehalt an teilweise ionisierbaren Verbindungen ist dabei differenziert zu betrachten. Zunächst ist der gesamte im Metall-Diorganylphosphinat vorhandene Gehalt (Gesamt-Gehalt) wichtig. Bevorzugt sind Gesamt-Gehalte von 8.200 bis 100 ppm, besonders bevorzugt 7.000 bis 200.

Es wurde nun überraschend gefunden, dass sich nur ein Teil der ionisierbaren Verbindungen durch wässrige Extraktion aus dem Diorganylphosphinsäure-Salz entfernen lässt (wasserlöslicher Anteil an ionisierbaren Verbindungen). Der verbleibende Rest, d. h. die Differenz zwischen Gesamt-Gehalt an teilweise ionisierbaren Verbindungen und wasserlöslichem Anteil an ionisierbaren Verbindungen ist auch durch wiederholtes Auswaschen nicht aus dem Diorganylphosphinsäure-Salz extrahierbar. Da es sich bei den vorliegenden Diorganylphosphinsäure-Salzen um polymere Koordinationsverbindungen handelt, können Anionen als Metallphosphinate, Metallhydroxophosphinate bzw. Metallhydroxosalze gebunden sein.

Bevorzugt sind Gehalte wasserlöslichen ionisierbaren Verbindungen von 3.200 bis 10 und besonders bevorzugt 2.000 bis 40 ppm.

Eine Teilchengröße oberhalb des bevorzugten Bereiches erschwert die gleichmäßige Verteilung des erfindungsgemäßen Diorganylphosphinsäure-Salze, eine Teilchengröße unterhalb des bevorzugten Bereiches erschwert die Einarbeitung wegen verstärkter Staubbildung und Explosionsgefahr.

Restfeuchten oberhalb der erfindungsgemäß bevorzugten Bereiche bewirken einen verstärkten Polymerabbau.

Das erfindungsgemäße Aluminiumtrisdiethylphosphinat durchläuft bei 160 bis 200, bevorzugt 175 bis 185 °C eine reversible Kristallumwandlung (Röntgenpulverdaten). Eine solche Umwandlung kann bei der Verarbeitung mit Kunststoffen vorteilhaft sein.

Die erfindungsgemäßen Diorganylphosphinsäure-Salze haben einen bevorzugten Gehalt an Initiatoren-Endgruppen 0,0001 bis 10 mol-%, besonders bevorzugt 0,001 bis 1 mol-%. Initiatoren-Endgruppen können beim Radikal-Kettenabbruch an das letzte Molekül der Radikalkette bei der Addition des Olefins an das Hypophosphit gebunden bleiben.

Die erfindungsgemäßen Diorganylphosphinsäure-Salze haben bevorzugte L-Farbwerte von 85 bis 99,9, besonders bevorzugt 90 bis 98.
Diorganylphosphinsäure-Salze mit L-Werten unterhalb des erfindungsgemäßen Bereiches erfordern einen höheren Weißpigmenteinsatz. Dieser verschlechtert die mechanischen Stabilitätseigenschaften des Polymerformkörpers (z. B. E-Modul).

Die erfindungsgemäßen Diorganylphosphinsäure-Salze haben bevorzugte a-Farbwerte von -4 bis +9, besonders bevorzugt -2 bis +6 sowie b-Farbwerte von -2 bis +6, besonders bevorzugt -1 bis +3.

Die Farbwerte werden im System nach Hunter (CIE-LAB-System, Commission Internationale d'Eclairage) angegeben.

Diorganylphosphinsäure-Salze mit a- bzw. b-Werten außerhalb des erfindungsgemäßen Bereiches erfordern einen höheren Weißpigmenteinsatz. Dieser verschlechtert die mechanischen Stabilitätseigenschaften des Polymerformkörpers (z. B. E-Modul).

Die erfindungsgemäßen Diorganylphosphinsäure-Salze zeigen verbesserte Verträglichkeit bei einer Vielfalt von Polymeren, die in erfindungsgemäßen flammgeschützten Polymerformmassen bzw. erfindungsgemäßen flammgeschützten Polymerformkörpern eingesetzt werden, z. B. bei Polyolefinen, Polystyrolen und Polystyrol-Copolymeren, Polyacrylaten und Polymethacrylaten, Vinyl- und Allyl-Polymeren, Homo- und Co-Polymeren von ungesättigten Alkoholen, Polyacetale, Polyphenylensulfide, Polyamide und Co-Polyamide, Polyester, Polycarbonate.

### Verfahren

Erfindungsgemäß wird das Diorganylphosphinsäure-Salz hergestellt, indem man die Diorganylphosphinsäure mit elementarem Metall, oder einem Metallsalz 0,01 bis 1 Stunden bei 0 bis 300 °C umsetzt. Bevorzugte Metallsalze sind dabei Metalloxide, gemischte Metall-Oxid-Hydroxide, Hydroxide etc.

In einer anderen erfindungsgemäßen Ausführungsform wird das Diorganylphosphinsäure-Salz hergestellt, indem man die Diorganylphosphinsäure mit einer freien Base 0,01 bis 1 Stunden bei 0 bis 300 °C umsetzt.

In einer anderen Ausführungsform wird das erfindungsgemäße Diorganylphosphinsäure-Salz hergestellt, indem man die Diorganylphosphinsäure in Form eines Alkalimetall-Salzes mit einem Salz des gewünschten Kations 0,01 bis 1 Stunden bei 0 bis 300 °C umsetzt.

Bevorzugte Salze, die die gewünschten Kationen liefern, sind dabei Acetate, Hydroxoacetate, Chloride, Hydroxochloride, Nitrate, Sulfate, Hydroxosulfate. Bevorzugt ist deren Konzentration in der wässrigen Lösung 5 bis 95 % (wasserfreier Feststoff), besonders bevorzugt 20 bis 50 Gew.-%.

Erfindungsgemäß sind die Alkalimetall-Diorganylphosphinsäure-Salze in wasserfreier, hydratisierter oder gelöster Form bevorzugt.
Die erfindungsgemäßen Alkalimetall-Diorganylphosphinsäure-Salze haben in Wasser und/oder den üblichen organischen Lösungsmitteln eine bevorzugte Löslichkeit zwischen 1 und 70 Gew.-% (wasserfreier Feststoff).

Die erfindungsgemäßen Diorganylphosphinsäure-Salze des gewünschten Kations haben in Wasser und/oder den üblichen organischen Lösungsmitteln eine bevorzugte Löslichkeit zwischen 0,001 und 10 Gew.-% (wasserfreier Feststoff).

In einer anderen Ausführungsform wird das erfindungsgemäße Diorganylphosphinsäure-Salze hergestellt, indem man die Diorganylphosphinsäure in Form eines reaktiven Derivates mit einem Derivat des gewünschten Kations 0,01 bis 1 Stunden bei 0 bis 300°C umsetzt. Bevorzugte Diorganylphosphinsäurederivate sind Diorganylphosphinsäureester, -pyroester, -chloride, -phosphate, -acetate, -phenolate etc.

Wahlweise können die Umsetzungen in einem Lösungsmittelsystem erfolgen.

Die Erfindung betrifft auch die Anwendung der erfindungsgemäßen Diorganylphosphinsäure-Salze in Flammschutzmittel-Zusammensetzungen. Dazu werden sie bevorzugt gemeinsam mit anderen Additiven eingesetzt.

Bevorzugt enthält die erfindungsgemäße Flammschutzmittel-Zusammensetzung 30 bis 99,9 Gew.-% eines erfindungsgemäßen Diorganylphosphinsäure-Salzes und 0,1 bis 50 % mindestens eines Additives.

Besonders bevorzugt enthält die erfindungsgemäße Flammschutzmittel-Zusammensetzung 95 bis 70 Gew.-% eines erfindungsgemäßen Diorganylphosphinsäure-Salzes und 5 bis 30 % mindestens eines Additives.

Bevorzugte weitere Additive in Flammschutzmittel-Zusammensetzungen sind z. B. Synergisten wie in DE-A-2827867, DE-A-19933901, DE-A-19614424, DE-A-19734437 beschrieben.

Erfindungsgemäß werden als Synergisten Melaminphosphat (z. B. Melapur^{®} MP der Fa. Ciba-DSM Melapur), Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate oder Mischungen davon bevorzugt.

In einer weiteren Ausführungsform sind Kondensationsprodukte des Melamins (z. B. Melam, Melem und/oder Melon) oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z. B. Melem, Melam oder Melon (WO-96/16948).

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze (WO-98/39306, WO-98/45364, WO-98/08898).

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melaminkondensationsprodukte wie Melam, Melem und/oder Melon, Melamincyanurat, Dicyandiamid und/oder Guanidin.

Erfindungsgemäß sind als Synergisten weiterhin bevorzugt stickstoffhaltige Phosphate der Formeln (NH₄)yH₃-yPO4 bzw. (NH₄PO₃)z, mit y gleich 1 bis 3 und z gleich 1 bis 10.000.

Erfindungsgemäß sind als Synergisten Stickstoffverbindungen bevorzugt, z. B. solche der Formeln (III) bis (VIII) oder Gemische davon 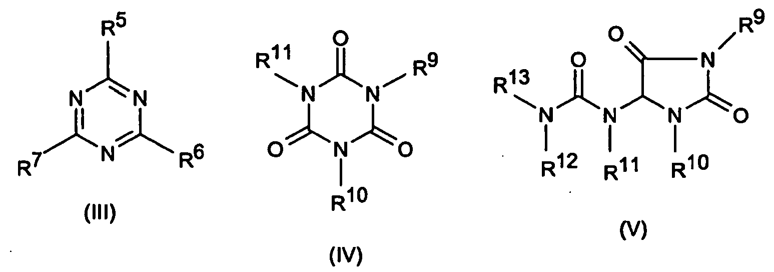 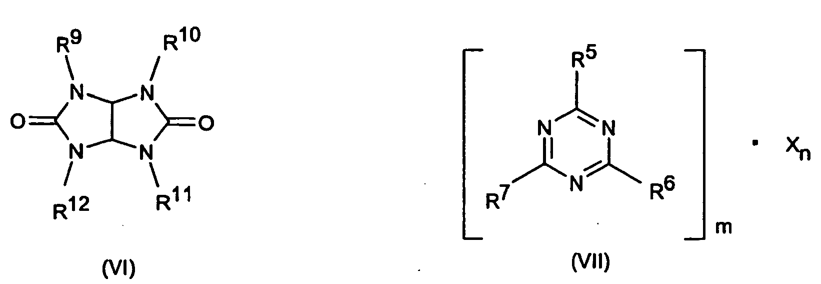 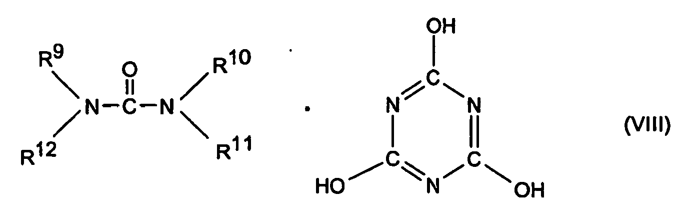 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einerC₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten.

Bevorzugte weitere Additive in Flammschutzmittel-Zusammensetzungen sind z. B. nach EP-A-1024167 Sauerstoffverbindungen des Siliciums, Magnesiumverbindungen, Metallcarbonate von Metallen der zweiten Hauptgruppe des Periodensystems, roter Phosphor, Zink- oder Aluminiumverbindungen.

Bevorzugte weitere Additive in Flammschutzmittel-Zusammensetzungen sind Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe.

Bevorzugte weitere Additive in Flammschutzmittel-Zusammensetzungen sind z. B. Magnesiumoxid, Magnesiumhydroxid, Hydrotalcite, Dihydrotalcit, Magnesium-Carbonate oder Magnesium-Calcium-Carbonate; Calciumhydroxid, Calciumoxid, Hydrocalumit; Zinkoxid, Zinkhydroxid, Zinnoxidhydrat, Zinkcarbonat, -stannat, -hydroxystannat, basisches Zink-Silikat, -phosphat, -borat, -molybdate oder -sulfide; Aluminiumoxid, Aluminiumhydroxid, Böhmit, Gibbsit oder Aluminiumphosphat; Manganoxid, Manganhydroxid oder Zinnoxid.

Bevorzugte weitere Additive in Flammschutzmittel-Zusammensetzungen sind in DE-A-19920276 beschrieben, z. B. aus der Gruppe der Carbodiimide und/oder (Poly-)isocyanate; geeignet sind auch Carbonylbiscaprolactam und Styrol-Acryl-Polymere.

Bevorzugte weitere Additive in Flammschutzmittel-Zusammensetzungen kommen aus der Gruppe der sterisch gehinderten Phenole, sterisch gehinderten Amine und Lichtstabilisatoren, Phosphonite und Antioxidantien und Trennmittel.

Bevorzugt wird das erfindungsgemäße Diorganylphosphinsäure-Salz in konfektionierter Form (gecoated, staubreduziert, schmelzgranuliert und/oder tropfgranuliert, kompaktiert, sprühgranuliert, dispergiert, Pastenform u. a.) Flammschutzformulierungen eingesetzt.

Die mittlere Teilchengröße der erfindungsgemäßen Flammschutzmittel-Zusammensetzungen beträgt 0,1 bis 3.000 µm.

Eine Teilchengröße oberhalb des bevorzugten Bereiches erschwert die gleichmäßige Verteilung des erfindungsgemäßen Diorganylphosphinsäure-Salzes, eine Teilchengröße unterhalb des bevorzugten Bereiches erschwert die Einarbeitung wegen verstärkter Staubbildung und Explosionsgefahr.

Die bevorzugte Schüttdichte des erfindungsgemäßen Flammschutzmittel-Zusammensetzung beträgt 80 bis 1.500 g/l, besonders bevorzugt 200 bis 1.000 g/l.

Insbesondere betrifft die Erfindung die Anwendung der erfindungsgemäßen Diorganylphosphinsäure-Salze und/oder der Flammschutzmittel-Zusammensetzungen in flammgeschützten Polymerformmassen enthaltend Polymer. Erfindungsgemäß bevorzugte Polymere sind thermoplastische wie z. B. wie Polyester, Polystyrol oder Polyamid und/oder duroplastische Polymere.

Besonders bevorzugt enthält die flammgeschützte Polymerformmasse
5 bis 30 Gew.-% erfindungsgemäße Diorganylphosphinsäure-Salze oder erfindungsgemäße Flammschutzmittel-Zusammensetzung
5 bis 90 Gew.-% Polymer oder Mischungen derselben
5 bis 40 Gew.-% Additive
5 bis 40 Gew.-% Füllstoff bzw. Verstärkungsmaterialien.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen; ferner Polyethylen (das gegebenenfalls vernetzt sein kann) sowie Mischungen davon.

Bevorzugt handelt es sich bei den Polymeren um Copolymere von Mono- und Diolefinen untereinander oder mit anderen Vinylmonomeren, ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol, Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Blockcopolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acryinitril-Copolymere, Styrol und Acrylnitril (bzw. Methacrylnitril) auf Polybutadien; sowie deren Mischungen, wie sie z. B. als so genannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten und Copolymere der genannten Monomeren untereinander oder mit anderen ungesättigten Monomeren.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7, Polyamid 7,7, Polyamid 8, Polyamid 8,8, Polyamid 9, Polyamid 9,9, Polyamid 10, Polyamid 10,9, Polyamid 10,10, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Geeignete Polymeren sind auch Polycarbonate und Polyestercarbonate, Polysulfone, Polyethersulfone und Polyetherketone. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Formen für Verstärkungsmaterialien für flammgeschützte Polymerformmassen und flammgeschützte Polymer-Formkörper sind Fasern, Vliese, Matten, Gewebe, Stränge, Bänder, Schläuche, Litzen, Massiv-, Form- und Hohlkörper.

Bevorzugte Materialien für Verstärkungsmaterialien für flammgeschützte Polymerformmassen und flammgeschützte Polymer-Formkörper sind anorganische Materialien wie Quarz-Glas, Kohlenstoff, Mineralien, Metall (Stahl, Aluminium, Magnesium, Molybdän, Wolfram), Keramik (Metalloxide).

Bevorzugte Materialien für Verstärkungsmaterialien für flammgeschützte Polymerformmassen und flammgeschützte Polymer-Formkörper sind Polykondensate wie z. B. Polyamid-6, Polyamid-6.6, Polyamid-11, aromatische Polyamide, Poly-p-phenylenterephthalamid, Polyethylenglycolterephthalat, Poly-1,4-dimethylencyclohexanterephthalat, Polycarbonat, Polyurethan-Elastomere.

Bevorzugte Materialien für Verstärkungsmaterialien für flammgeschützte Polymerformmassen und flammgeschützte Polymer-Formkörper sind Polymerisate wie z. B. Polyethylen, Polypropylen, Polyacrylnitril-Homopolymer, Polyacrylnitril-Mischpolymer, Modacryle, ataktisches Polyvinylchlorid, syndiotaktisches Polyvinylchlorid, Polyvinylalkohol, Polytetrafluorethylen, Polystyrol.

Bevorzugte Materialien für Verstärkungsmaterialien für flammgeschützte Polymerformmassen und flammgeschützte Polymer-Formkörper sind natürliche und halbsynthetische Fasern.

Die Zugabe von Glasfasern zu Polyamiden innerhalb der erfindungsgemäßen Konzentrationsbereiche führt zu einer bedeutenden Steigerung bei Festigkeit, Steifheit, Erweichungstemperatur, Schleiffestigkeit und Formbeständigkeit.

Ein erfindungsgemäßes Verfahren zur Herstellung von flammgeschützten Polymerformmassen besteht darin die Flammschutzmittel-Zusammensetzungen und/oder Diorganylphosphinsäure-Salze mit dem Polymergranulat und evtl. Additiven in einem Mischer zu vermischen und in einem erfindungsgemäßen Compoundieraggregat unter erfindungsgemäßen Bedingungen in der Polymerschmelze zu homogenisieren. Der homogenisierte Formmassen-Strang wird abgezogen, im Wasserbad gekühlt und anschließend granuliert.

In einer anderen Ausführungsform werden die Flammschutzmittel-Zusammensetzungen und/oder Diorganylphosphinsäure-Salze und/oder die Additive in einem Extruder durch einen Seiteneinzug zu dem Polymerstrom zudosiert und homogenisiert.

Geeignete Compoundieraggregate sind Einwellenextruder, Einschneckenextruder, Mehrzonenschnecken-Extruder, Ko-Kneter, Laborkneter oder Doppelschneckenextruder.

Die flammgeschützte Polymerformmasse liegt bevorzugt in Granulatform (Compound) vor.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Die erfindungsgemäßen flammgeschützten Polymerformmasse haben eine Restfeuchte von 0,01 bis 10 Gew.-%, bevorzugt von 0,1 bis 1 Gew.-%. Restfeuchten oberhalb der erfindungsgemäß bevorzugten Bereiche bewirken einen verstärkten Polymerabbau.

Erfindungsgemäß sind bei Polybutylenterephthalat-Formmassen SV-Zahlen von 750 bis 1.400 bevorzugt, 950 bis 1.300 besonders bevorzugt und 1.000 bis 1.200 besonders bevorzugt.

Zur Beurteilung der Verträglichkeit kann auch der Volumenfließindex (Melt Flow Index, MFI, MVR) herangezogen werden. Ein starker Anstieg des MVR-Wertes deutet auf Polymerabbau hin.

Bei erfindungsgemäßen glasfaserverstärkten flammgeschützten Polymerformmassen auf Basis von Polyamid 6.6 beträgt der Wert 2 bis 200 cm³/min (275 °C, 5 kg).

Die erfindungsgemäßen flammgeschützten Polymerformmassen werden erfindungsgemäß weiter zur Erzeugung von flammgeschützten Polymerformkörpern verwendet.

Die Erfindung betrifft schließlich auch Polymerformkörper, -Filme, -Fäden und -Fasern, enthaltend die erfindungsgemäßen Diorganylphosphinsäure-Salze und/oder die erfindungsgemäßen Flammschutzmittel-Zusammensetzungen und/oder die erfindungsgemäßen flammgeschützten Polymerformmassen.

Erfindungsgemäß bevorzugt ist die Anwendung der erfindungsgemäßen Diorganylphosphinsäure-Salze oder der erfindungsgemäßen Flammschutz-Zusammensetzungen in flammgeschützten Polymerformkörpern, -Filmen, -Fäden und -Fasern.

Erfindungsgemäß bevorzugt ist die Anwendung der erfindungsgemäßen flammgeschützten Polymerformmassen in flammgeschützten Polymerformkörpern, -Filmen, -Fäden und -Fasern.

Die erfindungsgemäßen flammgeschützten Polymerformmassen eignen sich zur Herstellung von Fasern, Folien und Formkörpern, insbesondere für Anwendungen im Elektro- und Elektronikbereich.
Erfindungsgemäß bevorzugt ist die Anwendung der erfindungsgemäßen flammgeschützten Polymerformkörpern als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Bei dem Polymer der Polymerformkörper, -Filme, -Fäden und -Fasern handelt es sich bevorzugt um ein thermoplastisches oder duroplastisches Polymer.

Bevorzugt enthalten die Polymerformkörper, -Filme, -Fäden und -Fasern 1 bis 50 Gew.- % erfindungsgemäßen Diorganylphosphinsäure-Salze
1 bis 99 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymerformkörper, -Filme, -Fäden und -Fasern
1 bis 70 Gew.- % erfindungsgemäßen Flammschutzmittel-Zusammensetzungen
1 bis 99 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymerformkörper, -Filme, -Fäden und -Fasern
1 bis 99 Gew.- % erfindungsgemäßen flammgeschützten Kunststoffformmassen
1 bis 99 Gew.-% Polymer oder Mischungen derselben
0,1 bis 60 Gew.-% Additive
0,1 bis 60 Gew.-% Füllstoff bzw. Verstärkungsmaterialien.

Überraschend wurde gefunden, dass die mechanischen Eigenschaften von Polymerformkörpern, die auf den erfindungsgemäßen Diorganylphosphinsäure-Salzen, Flammschutzmitteln oder flammgeschützten Formmassen basieren, erheblich besser sind, als der Stand der Technik.

Bevorzugt beträgt der E-Modul von Polymerformkörpern, die auf den erfindungsgemäßen Diorganylphosphinsäure-Salzen, Flammschutzmitteln oder flammgeschützten Formmassen und Polybutylenterephthalat, Polyamid 6.6 oder Polyamid basieren 10.000 bis 12.000 N/mm².

Bevorzugtes Verfahren zur Herstellung von flammgeschützten Polymerformkörpern ist das Spritzgießen und Pressen, Schaumspritzgießen, Gasinnendruck-Spritzgießen, Blasformen, Foliengießen, Kalandern, Laminieren, Beschichten, Spinnen etc.

Bevorzugte Additive für flammgeschützte Polymerformmassen und flammgeschützte Polymer-Formkörper sind Antioxidantien, UV-Absorber, Lichtschutzmittel, Gleitmittel, Farbmittel, Antistatika Nukleierungsmittel, anorganische Stoffe wie z. B. Talk, Metalloxide wie Titandioxid oder Magnesiumoxid, Phosphate, Carbonate oder Sulfate; organische Verbindungen wie Mono- oder Polycarbonsäuren sowie ihre Salze; polymere Verbindungen wie z. B. lonomere; Füllstoffe.

Erfindungsgemäß ist eine Flammschutz-Beschichtung enthaltend mindestens
1 bis 50 % erfindungsgemäße Flammschutzmittel-Zusammensetzung
0 bis 60 % Ammoniumpolyphosphat.

### Experimentelles

Bestimmung der Kornverteilung mit dem Microtrac Granulometer
Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermesszelle gepumpt. Automatisch wird die Festkörperprobe (z. B. 70 mg) zudosiert und nach 10 min die Teilchengrößenverteilung bestimmt. Die Auswertungseinheit des Gerätes berechnet den d50- und den d90-Wert.

### Bestimmung des Gesamt-Sulfat-Gehaltes

Eine Probe des erfindungsgemäßen Diorganylphosphinsäure-Salzes wird in einem Lösungsmittel (bevorzugt Wasser, Natronlauge oder Salzsäure) gelöst und das Sulfat nach den üblichen Verfahren (bevorzugt ist die lonenchromatographie) quantifiziert.

### Bestimmung des löslichen Sulfat-Gehaltes

90 g einer 2 %igen Isopropanol-Lösung werden einem 250 ml Becherglas eingewogen und in einem Temperierbad auf 90 °C erwärmt und mit einer Dissolverscheibe mit 900 U/min gerührt. Dann werden 10 g Diorganylphosphinsäure-Salz zugegeben. Die Suspension wird 5 min bei 900 U/min und bei 90 °C gerührt. Der Feststoff wird mit einer Nutsche (Filter: Schwarzband, 9 cm Durchmesser) abgenutscht und der Filterkuchen anschließend mit 20 g ca. 90 °C heißem VE-Wasser gewaschen. Das Filtrat wird auf 100 g mit VE-Wasser aufgefüllt. Die Lösung wird mittels lonenchromatographie auf den Sulfatgehalt analysiert. Der lösliche Sulfatgehalt berechnet sich wie folgt: Sulfatgehalt (Probe) [mg/kg] = Sulfatgehalt (im Filtrat) [mg/kg]* Endvolumen [mg] / Einwaage Diorganylphosphinsäure-Salz [mg]

### Bestimmung der SV-Zahl (Spezifische Viskosität)

0,5 g der Polymerprobe (z. B. PBT) werden mit 50 ml Dichloressigsäure (LM) in einen 250 ml Erlenmeyerkolben mit Schliffstopfen eingewogen. Die Probe wird unter Rühren bei 25 °C über einen Zeitraum von 16h gelöst. Die Lösung wird über eine G1-Glasfritte filtriert. 20 ml der Lösung werden in die Kapillare gefüllt, in das (Ubbelohde) Kapillarviskosimeter eingehängt und auf 25 °C temperiert. Der SV-Wert errechnet sich nach der Formel: SV-Wert=100*[Durchlaufzeit (Probenlösung)/Durchlaufzeit (LM)-1].

Statt Dichloressigsäure kann für Polyethylenterephthalat und Polybutylenterephtalat auch ein Gemisch von Phenol und 1,2-Dichlorbenzol (1:1, w/w) oder m-Kresol eingesetzt werden. Für Polyamid können Schwefelsäure, Ameisensäure oder m-Kresol verwendet werden.

Herstellung, Verarbeitung und Prüfung von flammhemmenden Compounds und Kunststoff-Formkörper

Die Flammschutzkomponenten werden mit dem Polymergranulat und evtl. Additiven vermischt und auf einem Doppelschnecken-Extruder (Typ Leistritz LSM 30/34) bei Temperaturen von 230 bis 260 °C (glasfaserverstärktes PBT) bzw. von 260 bis 280 °C (glasfaserverstärktes PA 66) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (glasfaserverstärktes PBT) bzw. von 260 bis 290 °C (glasfaserverstärktes PA 66) zu Prüfkörpern verarbeitet.

### Beispiel 1 (Vergleich, unbehandeltes Polymer)

In einem Laborkneter werden 70 g vorgetrocknetes Celanex^{®} 2500 (PBT) bei 240 °C über einen Zeitraum von 6 min bei 40 Upm gemischt. Nach dem Erkalten wird von einer Probe der Masse der SV-Wert zu 1386 bestimmt.

### Beispiel 2, Vergleich

In einem Laborkneter werden 56 g vorgetrocknetes Celanex^{®} 2500 (PBT) und 14 g Diorganylphosphinsäure-Salz nach DE-A-19851618 (1997DE128), Beispiel 2 (Acetatgehalt 8.800 ppm) bei 240 °C über einen Zeitraum von 6 min bei 40 Upm gemischt. Nach dem Erkalten wird von einer Probe der Masse der SV-Wert zu 578 bestimmt. Dieser Wert zeigt unzureichende Verträglichkeit des Diorganylphosphinsäure-Salzes mit dem Polymer an.

### Beispiel 3, Vergleich

In einem Laborkneter werden 56 g vorgetrocknetes Celanex^{®} 2500 (PBT) und 14 g Diorganylphosphinsäure-Salz nach DE-A-19851618 (1997DE128), Beispiel 4 (Acetatgehalt 4500 ppm) bei 240 °C über einen Zeitraum von 6 min bei 40 Upm gemischt. Nach dem Erkalten wird von einer Probe der Masse der SV-Wert zu 589 bestimmt (unzureichende Verträglichkeit des Diorganylphosphinsäure-Salzes mit dem Polymer).

### Beispiel 4, Vergleich

In einem Laborkneter werden 56 g vorgetrocknetes Celanex^{®} 2500 (PBT) und 14 g Diorganylphosphinsäure-Salz (Gesamt-Chloridgehalt 1950 ppm, löslicher ChloridGehalt 1.073 ppm) bei 240 °C über einen Zeitraum von 6 min bei 40 Upm gemischt. Nach dem Erkalten wird von einer Probe der Masse der SV-Wert zu 608 bestimmt (unzureichende Verträglichkeit des Diorganylphosphinsäure-Salzes mit dem Polymer).

### Beispiel 5

In einem Laborkneter werden 56 g vorgetrocknetes Celanex^{®} 2500 (PBT) und 14 g Diorganylphosphinsäure-Salz (Gesamt-Chloridgehalt 1677 ppm, löslicher ChloridGehalt 805 ppm) bei 240 °C über einen Zeitraum von 6 min bei 40 Upm gemischt. Nach dem Erkalten wird von einer Probe der Masse der SV-Wert zu 805 bestimmt.

### Beispiel 6

In einem Laborkneter werden 56 g vorgetrocknetes Celanex^{®} 2500 (PBT) und 14 g Diorganylphosphinsäure-Salz (Gesamt-Chloridgehalt 1257 ppm, löslicher ChloridGehalt 357 ppm) bei 240 °C über einen Zeitraum von 6 min bei 40 Upm gemischt. Nach dem Erkalten wird von einer Probe der Masse der SV-Wert zu 948 bestimmt.

### Beispiel 7

In einem Laborkneter werden 56 g vorgetrocknetes Celanex^{®} 2500 (PBT) und 14 g Diorganylphosphinsäure-Salz (Gesamt-Chloridgehalt 584 ppm, löslicher ChloridGehalt 70 ppm) bei 240 °C über einen Zeitraum von 6 min bei 40 Upm gemischt. Nach dem Erkalten wird von einer Probe der Masse der SV-Wert zu 1121 bestimmt.

### Beispiel 8

In einem Laborkneter werden 56 g vorgetrocknetes Celanex^{®} 2500 (PBT) und 14 g Diorganylphosphinsäure-Salz (Gesamt-Chloridgehalt 280 ppm, löslicher ChloridGehalt 18 ppm) bei 240 °C über einen Zeitraum von 6 min bei 40 Upm gemischt. Nach dem Erkalten wird von einer Probe der Masse der SV-Wert zu 1242 bestimmt.

### Beispiel 9, Vergleich

Gemäß der allgemeinen Vorschrift wird eine Mischung von 50 Gew.-% Polybutylenterephthalat, 15 Gew.-% Phosphinsäuresalz aus Beispiel 2, 5 Gew.-% Melamincyanurat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9150 N/mm² gemessen.

### Beispiel 10, Vergleich

Gemäß der allgemeinen Vorschrift wird eine Mischung von 50 Gew.-% Polybutylenterephthalat, 15 Gew.-% Phosphinsäuresalz aus Beispiel 3, 5 Gew.-% Melamincyanurat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.573 N/mm² gemessen.

### Beispiel 11

Gemäß der allgemeinen Vorschrift wird eine Mischung von 50 Gew.-% Polybutylenterephthalat, 5 Gew.-% Phosphinsäuresalz aus Beispiel 7, 15 Gew.-% Melamincyanurat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 10.480 N/mm² gemessen. Weiterhin wurde eine UL-94 Klassifizierung von V-0 bestimmt.

### Beispiel 12a, Vergleich

Gemäß der allgemeinen Vorschrift wird eine Mischung von 50 Gew.-% Polyamid 6.6, 13,3 Gew.-% Phosphinsäuresalz aus Beispiel 2, 6,7 Gew.-% Melaminpolyphosphat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.000 N/mm² gemessen. Außerdem wurde eine UL-94 Klassifizierung von V-0 bestimmt.

### Beispiel 13

Gemäß der allgemeinen Vorschrift wird eine Mischung von 50 Gew.-% Polyamid 6.6, 6,7 Gew.-% Phosphinsäuresalz aus Beispiel 8, 13,3 Gew.-% Melaminpolyphosphat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und eine UL-94 Klassifizierung von V-0 bestimmt.

### Beispiel 14, Vergleich

Gemäß der allgemeinen Vorschrift wird eine Mischung von 50 Gew.-% Polyamid 6.6, 15 Gew.-% Phosphinsäuresalz aus Beispiel 2, 4 Gew.-% Melaminpolyphosphat, 1 Gew.-% Zinkborat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.100 N/mm² gemessen.

### Beispiel 15, Vergleich

Gemäß der allgemeinen Vorschrift wird eine Mischung von 50 Gew.-% Polyamid 6.6, 15 Gew.-% Phosphinsäuresalz aus Beispiel 3, 4 Gew.-% Melaminpolyphosphat, 1 Gew.-% Zinkborat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.500 N/mm² gemessen.

### Beispiel 16

Gemäß der allgemeinen Vorschrift wird eine Mischung von 50 Gew.-% Polyamid 6.6, 6,3 Gew.-% Phosphinsäuresalz aus Beispiel 8, 12,7 Gew.-% Melaminpolyphosphat, 1 Gew.-% Zinkoxid und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und eine UL-94 Klassifizierung von V-0 bestimmt.

### Verwendete Chemikalien

- Polybutylenterephthalat:: Celanex 2500, Fa. Ticona
- Polyamid 6.6:: Ultramid A3, Fa. BASF
- Polyamid 6:: Zytel 7301, Fa. Du Pont
- Melaminpolyphosphat:: Melapur 200/70, Fa. Ciba DSM-Melapur
- Melamincyanurat:: Melapur MC, Fa. Ciba DSM-Melapur
- Zinkborat:: Firebrake 500, Fa. Borax
- Zinkoxid:: Fa. Rheinchemie
- Zinkhydroxystannat:: Flamtard H, Fa. Blythe
- Zinkstearat:: Liga 101, Fa. Greven Fett-Chemie
- Glasfasern 1:: Vetrotex EC 10 983, Fa. Saint-Gobain
- Glasfasern 2:: PPG 3540, Fa. PPG Industries, Inc.

**Tabelle 1**

| Beispiel | Acetat | | Chlorid | | SV-Zahl |
|---|---|---|---|---|---|
| | Gesamt [ppm] | Löslich [ppm] | Gesamt [ppm] | Löslich [ppm] | |
| 1 (Vgl. Polymer) | - | - | - | - | 1386 |
| 2 (Vgl.) DE19851618, Bsp. 2 | 8800 | - | - | - | 578 |
| 3 (Vgl.) DE19851618, Bsp. 4 | 4500 | - | - | - | 589 |
| 4 (Vgl.) | - | - | 1950 | 1073 | 608 |
| 5 | - | - | 1677 | 805 | 805 |
| 6 | - | - | 1257 | 357 | 948 |
| 7 | - | - | 584 | 70 | 1121 |
| 8 | - | - | 280 | 18 | 1242 |

**Tabelle 2**

| | | Beispiel | | | | | | | |
|---|---|---|---|---|---|---|---|---|---|
| | | 9 (Vgl.) | 10 (Vgl.) | 11 | 12 | 13 | 14 | 15 | 16 |
| Polybutylenterephthalat | [Gew.-%] | 50 | 50 | 50 | - | - | - | - | - |
| Polyamid 6.6 | [Gew.-%] | - | - | - | 50 | 50 | 50 | 50 | 50 |
| Polyamid 6 | [Gew.-%] | - | - | - | - | - | - | - | - |
| Phosphinsäuresalz Bsp. 2 (Vgl.) | [Gew.-%] | 15 | - | - | 13,3 | - | 15 | - | - |
| Phosphinsäuresalz Bsp. 3 (Vgl.) | [Gew.-%] | - | 15 | - | - | - | - | 15 | - |
| Phosphinsäuresalz Bsp. 7 | [Gew.-%] | - | - | 5 | - | - | - | - | - |
| Phosphinsäuresalz Bsp. 8 | [Gew.-%] | - | - | - | - | 6,7 | - | - | 6,3 |
| Melaminpolyphosphat | [Gew.-%] | - | - | - | 6,7 | 13,3 | 4 | 4 | 12,7 |
| Melamincyanurat | [Gew.-%] | 5 | 5 | 15 | - | - | - | - | - |
| Zinkborat | [Gew.-%] | - | - | - | - | - | 1 | 1 | - |
| Zinkoxid | [Gew.-%] | - | - | - | - | - | - | - | 1 |
| Zinkhydroxystannat | [Gew.-%] | - | - | - | - | - | - | - | - |
| Zinkstearat | [Gew.-%] | - | - | - | - | - | - | - | - |
| Glasfasern 1 | [Gew.-%] | 30 | 30 | 30 | - | - | - | - | - |
| Glasfasern 2 | [Gew.-%] | - | - | - | 30 | 30 | 30 | 30 | 30 |
| E-Modul | [N/mm²] | 9150 | 9573 | 10480 | 9000 | 9100 | - | 9500 | - |
| UL-94 Klassifizierung | - | V-0 | V-0 | V-0 | V-0 | V-0 | V-0 | V-0 | V-0 |

## Patentansprüche

1. Diorganylphosphinsäure-Salze der Formel (I) 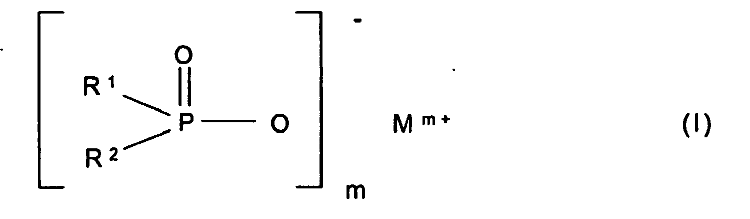 worin
R¹, R² gleich oder verschieden sind und C₁-C₆-Alkyl, linear oder verzweigt und/oder Aryl;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4;
x 1 bis 4
bedeuten, **dadurch gekennzeichnet, dass** der Gesamt-Gehalt an teilweise wasserlöslichen, ionisierbaren Verbindungen und der wasserlösliche Gehalt aus den teilweise wasserlöslichen, ionisierbaren Verbindungen 8.200 bis 100 ppm, bevorzugt 7.000 bis 200 ppm beträgt und dass es sich bei den teilweise wasserlöslichen, ionisierbaren Verbindungen um solche handelt, die sich von Acetaten, Chloriden, Nitraten, Sulfaten, Phosphiten oder Phosphaten ableiten und dass der Gesamt-Gehalt an Chlorid (teilweise wasserlösliche, ionisierbare Verbindung) 1.700 bis 100 ppm und der Gehalt an wasserlöslichem Chlorid (wasserlöslicher Gehalt aus der teilweise wasserlöslichen, ionisierbaren Verbindung) 950 bis 10 ppm beträgt.

2. Diorganylphosphinsäure-Salze der Formel (I) nach Anspruche 1, **dadurch gekennzeichnet, dass** der Gesamt-Gehalt an Chlorid (teilweise wasserlösliche, ionisierbare Verbindung) 1.500 bis 200 ppm und der Gehalt an wasserlöslichem Chlorid (wasserlöslicher Gehalt aus der teilweise wasserlöslichen, ionisierbaren Verbindung) 750 bis 40 ppm beträgt.

3. Diorganylphosphinsäure-Salze der Formel (I) nach einem oder mehreren der Ansprüche 1 und 2, **dadurch gekennzeichnet, dass** M Aluminium, Calcium, Titan, Zink, Zinn oder Zirkonium bedeutet.

4. Diorganylphosphinsäure-Salze der Formel (I) nach einem oder mehreren der Ansprüche 1 bis 3, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

5. Diorganylphosphinsäure-Salze der Formel (I) nach einem oder mehreren der Ansprüche 1 bis 4, **dadurch gekennzeichnet, dass** es sich bei den Diorganylphosphinsäure-Salzen der Formel (I) um solche aus der Gruppe Aluminiumtrisdiethylphosphinat, Aluminiumtrismethylethylphosphinat, Aluminiumtrisdiphenylphosphinat, Zinkbisdiethylphosphinat, Zinkbismethylethylphosphinat, Zinkbisdiphenylphosphinat , Titanylbisdiethylphosphinat, Titantetrakisdiethylphosphinat, Titanylbismethylethylphosphinat, Titaritetrakismethylethylphosphinat, Titanylbisdiphenylphosphinat, Titantetrakisdiphenylphosphinat und beliebige Mischungen davon handelt.

6. Diorganylphosphinsäure-Salze der Formel (I) nach einem oder mehreren der Ansprüche 1 bis 5, **dadurch gekennzeichnet, dass** ihre Restfeuchte 0,01 bis 10 Gew.-%, ihre Teilchengröße 0,1 bis 1.000 µm und ihre Schüttdichte 80 bis 800 g/l beträgt.

7. Verfahren zur Herstellung von Diorganylphosphinsäure-Salzen der Formel (I) nach einem oder mehreren der Ansprüche 1 bis 6, **dadurch gekennzeichnet, dass** man die Diorganylphosphinsäure
a) mit einer freien Base oder
b) mit dem elementarem Metall des gewünschten Kations oder
c) in ihrer Form als Alkalimetall-Salz mit einem Salz des gewünschten Kations oder
d) in Form eines reaktiven Derivates mit einem Derivat des gewünschten Kations 0,01 bis 1 Stunden bei 0 bis 300 °C umsetzt.

8. Verwendung von Diorganylphosphinsäure-Salzen nach einem oder mehreren der Ansprüche 1 bis 6 als Flammschutzmittel, insbesondere in Polymeren oder in Flammschutzmittel-Zusammensetzungen, insbesondere für Polymere.

9. Verwendung nach Anspruch 8, **dadurch gekennzeichnet, dass** die Flammschutzmittel-Zusammensetzung 50 bis 99,9 Gew.-% eines Diorganylphosphinsäure-Salzes nach einem oder mehreren der Ansprüche 1 bis 6 enthält und 0,1 bis 50 Gew.-% mindestens eines Additives enthält.

10. Verwendung einer Flammschutzmittel-Zusammensetzung nach Anspruch 8 oder 9, **dadurch gekennzeichnet, dass** die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; aus der Gruppe oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; aus der Gruppe der Zinkverbindungen wie Zinkoxid, Zinkhydroxid, Zinnoxidhydrat, Zinkcarbonat, Zinkstannat, Zinkhydroxystannat, Zink-Silikat, Zinkphosphat, Zinkborat, Zinkmolybdat; aus der Gruppe der Carbodiimide und/oder (Poly-)isocyanate, wie Carbonylbiscaprolactam und/oder Styrol-Acryl-Polymere entstammen.

11. Verwendung von Diorganylphosphinsäure-Salzen nach einem oder mehreren der Ansprüche 1 bis 6 in oder zur Herstellung von flammgeschützten Polymerformmassen, wobei die flammgeschützte Polymerformmasse 1 bis 50 Gew.-% Diorganylphosphinsäure-Salze nach mindestens einem der Ansprüche 1 bis 6, 1 bis 99 Gew.-% Polymer oder Mischungen derselben enthält.

12. Verwendung nach einem oder mehreren der Ansprüche 8 bis 11, **dadurch gekennzeichnet, dass** die Polymere aus der Gruppe der thermoplastischen Polymere wie Polyester, Polystyrol oder Polyamid und/oder der duroplastischen Polymere entstammen.

13. Verwendung nach einem oder mehreren der Ansprüche 8 bis 12, **dadurch gekennzeichnet, dass** die Polymerformmasse erhalten wurde, indem die Diorganylphosphinsäure-Salze und/oder die Flammschutzmittel-Zusammensetzungen mit dem Polymergranulat und evtl. Additiven in einem Mischer vermischt, in einem Compoundieraggregat unter höheren Temperaturen in der Polymerschmelze homogenisiert werden und anschließend der homogenisierte Polymerstrang abgezogen, gekühlt und portioniert wird.

14. Verwendung der Diorganylphosphinsäure-Salze nach mindestens einem der Ansprüche 1 bis 6 in flammgeschützten Polymerformkörpern, -Filmen, -Fäden und -Fasern, wobei die flammgeschützten Polymerformkörper, -Filme, -Fäden und -Fasern 1 bis 50 Gew.-% Diorganylphosphinsäure-Salze nach einem oder mehreren der Ansprüche 1 bis 17, 1 bis 99 Gew.-% Polymer oder Mischungen derselben, 0 bis 60 Gew.-% Additive und 0 bis 60 Gew.-% Füllstoff bzw. Verstärkungsmaterialien enthalten.

## Claims

1. A diorganylphosphinic salt of the formula (I) 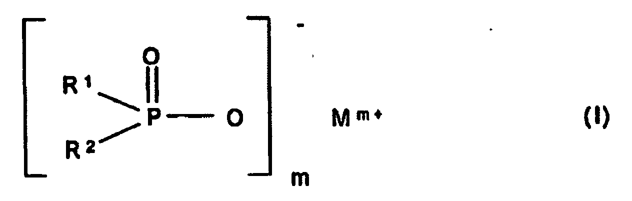 where
R¹ and R² are identical or different and are C₁-C₆-alkyl, linear or branched, and/or aryl;
M is Mg, Ca, Al, Sb, Sn, Ge, Ti, Fe, Zr, Zn, Ce, Bi, Sr, Mn, Li, Na, K, and/or a protonated nitrogen base;
m is from 1 to 4;
x is from 1 to 4,
wherein the total content of partially water-soluble, ionizable compounds and the water-soluble content of the partially water-soluble, ionizable compounds is from 8200 to 100 ppm, preferably from 7000 to 200 ppm, and wherein the partially water-soluble, ionizable compounds comprise compounds which derive from acetates, from chlorides, from nitrates, from sulfates, from phosphites, or from phosphates and wherein the total content of chloride (partially water-soluble, ionizable compound) is from 1700 to 100 ppm, and the content of water-soluble chloride (water-soluble content of the partially water-soluble, ionizable compound) is from 950 to 10 ppm.

2. The diorganylphosphinic salt of the formula (I) as claimed in claim 1, wherein the total content of chloride (partially water-soluble, ionizable compound) is from 1500 to 200 ppm, and the content of water-soluble chloride (water-soluble content of the partially water-soluble, ionizable compound) is from 750 to 40 ppm.

3. The diorganylphosphinic salt of the formula (I) as claimed in one or more of claims 1 and 2, wherein M is aluminum, calcium, titanium, zinc, tin or zirconium.

4. The diorganylphosphinic salt of the formula (I) as claimed in one or more of claims 1 to 3, wherein R¹ and R², identical or different, are methyl, ethyl, n-propyl, isopropyl, n-butyl, tert-butyl, n-pentyl, and/or phenyl.

5. The diorganylphosphinic salt of the formula (I) as claimed in one or more of claims 1 to 4, wherein the diorganylphosphinic salts of the formula (I) comprise those from the group of aluminum trisdiethylphosphinate, aluminum trismethylethylphosphinate, aluminum trisdiphenylphosphinate, zinc bisdiethylphosphinate, zinc bismethylethylphosphinate, zinc bisdiphenylphosphinate, titanyl bisdiethylphosphinate, titanium tetrakisdiethylphosphinate, titanyl bismethylethylphosphinate, titanium tetrakismethylethylphosphinate, titanyl bisdiphenylphosphinate, titanium tetrakisdiphenylphosphinate and any desired mixture thereof.

6. The diorganylphosphinic salt of the formula (I) as claimed in one or more of claims 1 to 5, wherein the residual moisture thereof is from 0.01 to 10% by weight, the particle size thereof is from 0.1 to 1000 µm, and the bulk density thereof is from 80 to 800 g/l.

7. A process for preparation of diorganylphosphinic salts of the formula (I) as claimed in one or more of claims 1 to 6, which comprises reacting the diorganylphosphinic acid
a) with a free base, or
b) with the elemental metal of the desired cation, or
c) in its alkali metal salt form, with a salt of the desired cation, or
d) in the form of a reactive derivative, with a derivative of the desired cation for from 0.01 to 1 hours at from 0 to 300°C.

8. The use of diorganylphosphinic salts as claimed in one or more of claims 1 to 6 as flame retardants, in particular in polymers or in flame retardant compositions, in particular for polymers.

9. The use as claimed in claim 8, wherein the flame retardant composition comprises from 50 to 99.9% by weight of a diorganylphosphinic salt as claimed in one or more of claims 1 to 6 and from 0.1 to 50% by weight of at least one additive.

10. The use of a flame retardant composition as claimed in claim 8 or 9, wherein the additives derive from the group of melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate, and/or melon polyphosphate; from the group of oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide, and/or guanidine; from the group of the zinc compounds, such as zinc oxide, zinc hydroxide, zinc oxide hydrate, zinc carbonate, zinc stannate, zinc hydroxystannate, zinc silicate, zinc phosphate, zinc borate, zinc molybdate; from the group of the carbodiimides and/or (poly)isocyanates, e.g. carbonylbiscaprolactam and/or styrene-acrylic polymers.

11. The use of diorganylphosphinic salts as claimed in one or more of claims 1 to 6 in or for preparation of flame-retardant polymer molding compositions, where the flame-retardant polymer molding composition comprises from 1 to 50% by weight of diorganylphosphinic salts as claimed in at least one of claims 1 to 6 and from 1 to 99% by weight of polymer or a mixture of these.

12. The use as claimed in one or more of claims 8 to 11, wherein the polymers derive from the group of the thermoplastic polymers, such as polyester, polystyrene, or polyamide, and/or of the thermoset polymers.

13. The use as claimed in one or more of claims 8 to 12, wherein the polymer molding composition has been obtained by mixing the diorganylphosphinic salts and/or the flame retardant compositions with the polymer pellets and optionally with additives in a mixer, homogenizing them in a compounding assembly at relatively high temperatures in the polymer melt, and then drawing the homogenized polymer strand off, and cooling it and dividing it.

14. The use of the diorganylphosphinic salts as claimed in at least one of claims 1 to 6 in flame-retardant polymer moldings, in flame-retardant polymer films, in flame-retardant polymer filaments, or in flame-retardant polymer fibers, where the flame-retardant polymer moldings, flame-retardant polymer films, flame-retardant polymer filaments, or flame-retardant polymer fibers comprise from 1 to 50% by weight of diorganylphosphinic salts as claimed in one or more of claims 1 to 17, from 1 to 99% by weight of polymer or of a mixture of these, from 0 to 60% by weight of additives, and from 0 to 60% by weight of filler or of reinforcing materials.

## Revendications

1. Sels d'acides diorganylphosphiniques de formule (I) 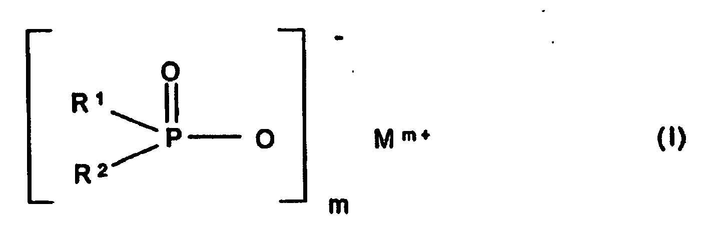 dans laquelle
R¹, R² sont identiques ou différents et représentent un groupe alkyle en C₁-C₆, linéaire ou ramifié et/ou un groupe aryle ;
M représente Mg, Ca, Al, Sb, Sn, Ge, Ti, Fe, Zr, Zn, Ce, Bi, Sr, Mn, Li, Na, K et/ou une base azotée protonée ;
m vaut de 1 à 4 ;
x vaut de 1 à 4 ;
**caractérisés en ce que** la teneur totale en composés ionisables, en partie hydrosolubles, et la fraction hydrosoluble des composés ionisables, en partie hydrosolubles, valent de 8 200 à 100 ppm, de préférence de 7 000 à 200 ppm, et **en ce que** les composés ionisables, en partie hydrosolubles, consistent en ceux qui dérivent d'acétates, de chlorures, nitrates, sulfates, phosphites ou phosphates et **en ce que** la teneur totale en chlorure (composé ionisable, en partie hydrosoluble) vaut de 1 700 à 100 ppm et la teneur en chlorure hydrosoluble (fraction hydrosoluble du composé ionisable, en partie hydrosoluble) vaut de 950 à 10 ppm.

2. Sels d'acides diorganylphosphiniques de formule (I) selon la revendication 1, **caractérisés en ce que** la teneur totale en chlorure (composé ionisable, en partie hydrosoluble) vaut de 1 500 à 200 ppm et la teneur en chlorure hydrosoluble (fraction hydrosoluble du composé ionisable, en partie hydrosoluble) vaut de 750 à 40 ppm.

3. Sels d'acides diorganylphosphiniques de formule (I) selon une ou plusieurs des revendications 1 et 2, **caractérisés en ce** M représente l'aluminium, le calcium, le titane, le zinc, l'étain ou le zirconium.

4. Sels d'acides diorganylphosphiniques de formule (I) selon une ou plusieurs des revendications 1 à 3, **caractérisés en ce que** R¹, R² sont identiques ou différents et représentent le groupe méthyle, éthyle, n-propyle, isopropyle, n-butyle, tert-butyle, n-pentyle et/ou phényle.

5. Sels d'acides diorganylphosphiniques de formule (I) selon une ou plusieurs des revendications 1 à 4, **caractérisés en ce que** les sels d'acides diorganylphosphiniques de formule (I) consistent en ceux choisis dans le groupe constitué par le trisdiéthylphosphinate d'aluminium, le trisméthyléthylphosphinate d'aluminium, le trisdiphénylphosphinate d'aluminium, le bisdiéthylphosphinate de zinc, le bisméthyléthylphosphinate de zinc, le bisdiphénylphosphinate de zinc, le bisdiéthylphosphinate de titanyle, le tétrakisdiéthylphosphinate de titane, le bisméthyléthylphosphinate de titanyle, le tétrakisméthyléthylphosphinate de titane, le bisdiphénylphosphinate de titanyle, le tétrakisdiphénylphosphinate de titane et des mélanges quelconques de ceux-ci.

6. Sels d'acides diorganylphosphiniques de formule (I) selon une ou plusieurs des revendications 1 à 5, **caractérisés en ce que** leur taux d'humidité résiduelle vaut de 0,01 à 10 % en poids, leur taille de particule vaut de 0,1 à 1 000 µm et leur densité apparente vaut de 80 à 800 g/l.

7. Procédé pour la préparation de sels d'acides diorganylphosphiniques de formule (I) selon une ou plusieurs des revendications 1 à 6, **caractérisé en ce qu'**on fait réagir pendant 0,01 à 1 heure, à une température de 0 à 300 °C, l'acide diorganylphosphinique
a) avec une base libre, ou
b) avec le métal élémentaire du cation désiré ou
c) sous sa forme de sel avec un métal alcalin, avec un sel du cation désiré, ou
d) sous forme d'un dérivé réactif, avec un dérivé du cation désiré.

8. Utilisation de sels d'acides diorganylphosphiniques selon une ou plusieurs des revendications 1 à 6, en tant qu'agent ignifuge, en particulier dans des polymères ou dans des compositions d'agents ignifuges, en particulier pour polymères.

9. Utilisation selon la revendication 8, **caractérisée en ce que** la composition d'agent ignifuge contient de 50 à 99,9 % en poids d'un sel d'acide diorganylphosphinique selon une ou plusieurs des revendications 1 à 6 et de 0,1 à 50 % en poids d'au moins un additif.

10. Utilisation d'une composition d'agent ignifuge selon la revendication 8 ou 9, **caractérisée en ce que** les additifs sont choisis dans le groupe constitué par le phosphate de mélamine, le phosphate de dimélamine, le triphosphate de pentamélamine, le diphosphate de trimélamine, le triphosphate de tétrakismélamine, le pentaphosphate d'hexakismélamine, le diphosphate de mélamine, le tétraphosphate de mélamine, le pyrophosphate de mélamine, le polyphosphate de mélamine, le polyphosphate de melam, le polyphosphate de melem et/ou le polyphosphate de melon ; dans le groupe constitué par des esters oligomères de l'isocyanurate de tris(hydroxyéthyle) avec des acides polycarboxyliques aromatiques, la benzoguanamine, l'isocyanurate de tris(hydroxyéthyle), l'allantoïne, le glyco-urile, la mélamine, le cyanurate de mélamine, le cyanurate d'urée, le dicyanodiamide et/ou la guanidine ; dans le groupe des composés de zinc, tels que l'oxyde de zinc, l'hydroxyde de zinc, l'oxyde-hydrate de zinc, le carbonate de zinc, le stannate de zinc, l'hydroxystannate de zinc, le silicate de zinc, le phosphate de zinc, le borate de zinc, le molybdate de zinc ; dans le groupe des carbodiimides et/ou des (poly-)isocyanates, tels que le carbonylbiscaprolactame et/ou des polymères styrène/acryliques.

11. Utilisation des sels d'acides diorganylphosphiniques selon une ou plusieurs des revendications 1 à 6, dans des ou pour la production de matières à mouler polymères ignifugées, la matière à mouler polymère ignifugée contenant de 1 à 50 % en poids de sels d'acides diorganylphosphiniques selon au moins l'une des revendications 1 à 6, de 1 à 99 % en poids de polymère ou de mélanges de tels polymères.

12. Utilisation selon une ou plusieurs des revendications 8 à 11, **caractérisée en ce que** les polymères sont choisis dans le groupe des polymères thermoplastiques, tels que les polyesters, le polystyrène ou le polyamide et/ou des polymères thermodurcissables.

13. Utilisation selon une ou plusieurs des revendications 8 à 12, **caractérisée en ce que** la matière à mouler polymère a été obtenue par mélange dans un mélangeur des sels d'acides diorganylphosphiniques et/ou des compositions d'agents ignifuges avec le produit granulé polymère et éventuellement des additifs, homogénéisation dans un appareil de compoundage à températures élevées dans la masse fondue de polymère et ensuite tirage, refroidissement et fragmentation du boudin de polymère homogénéisé.

14. Utilisation des sels d'acides diorganylphosphiniques selon au moins l'une des revendications 1 à 6, dans des corps moulés, films, fils et fibres en polymère ignifugés, les corps moulés, films, fils et fibres en polymère ignifugés contenant de 1 à 50 % en poids de sels d'acides diorganylphosphiniques selon une ou plusieurs des revendications 1 à 17, de 1 à 99 % en poids de polymère ou de mélanges de tels polymères, de 0 à 60 % en poids d'additifs et de 0 à 60 % en poids de charge ou de matières de renfort.
